# EUROPEAN PATENT APPLICATION

(11) **EP 0 903 951 A2**
(43) Date of publication of application: **24.03.1999**
(21) Application number: 98117328.9
(22) Date of filing: 11.09.1998
(51) Int. Cl.: H04Q 7/38, H03G 3/20, H04B 7/005

(54) **Base station searching device**

(30) Priority: 20.09.1997 JP 273735/97
(71) Applicant: Matsushita Electric Industrial Co., Ltd., Kadoma-shi, Osaka 571-8501 (JP)
(72) Inventor: Moriya, Masahiro, Yokohama-shi, Kanagawa 226-0003 (JP)
(74) Representative: Grünecker, Kinkeldey, Stockmair & Schwanhäusser Anwaltssozietät

(57) **Abstract**

A mobile radio terminal apparatus in a code division multiple access system comprises level crossing number counter section 201 that calculates the Doppler frequency caused by the fading, moving speed calculation section 202 and search processing control section 203 that controls the frequency of search processing using the moving speed information in the variable mode.

## Description

### BACKGROUND OF THE INVENTION

### Field of the Invention

The present invention relates to a base station searching device using a code division multiple access system.

### Description of the Related Art

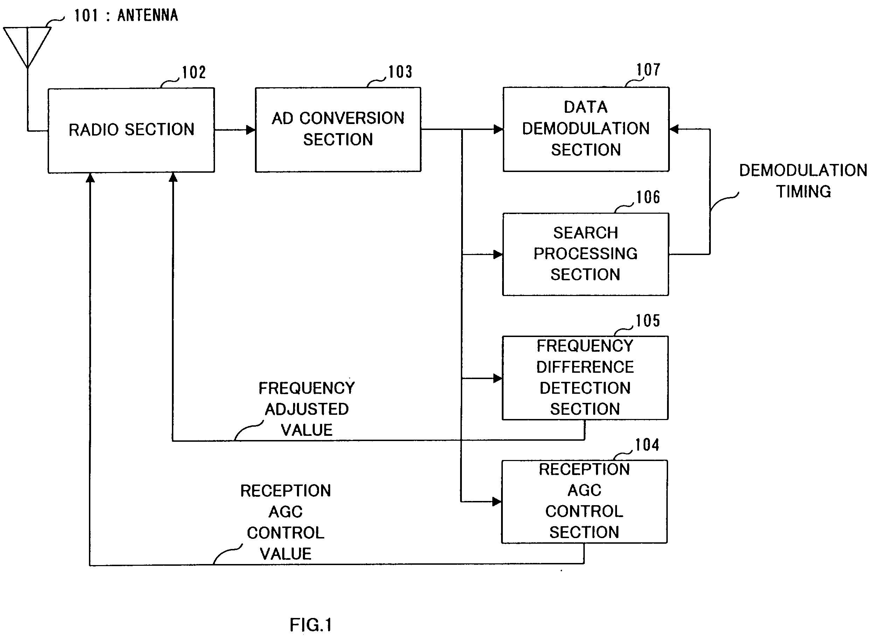

A mobile radio terminal apparatus using a conventional code division multiple access system (hereafter referred to as "CDMA system") is explained below with reference to FIG. 1.

The conventional mobile radio terminal apparatus using a CDMA system comprises antenna 101 for transmitting and receiving a radio frequency band signal to/from a base station apparatus, radio section 102 that converts the radio frequency band signal received by this antenna 101 to a baseband signal and AD conversion section 103 that converts this received baseband signal from analog to digital.

It also comprises reception AGC control section 104 that generates a reception AGC control value to adjust the reception gain so that the level of the received signal in radio section 102 should be kept constant by calculating the time average of the received baseband digital signal and calculating the level of the received signal, and frequency difference detection section 105 that calculates a carrier frequency difference between the base station apparatus and mobile station apparatus from the received baseband digital signal and generates a frequency control value to directly or indirectly adjust the carrier frequency of radio section 102.

It further comprises search processing section 106 that detects the correlation between a reference signal and the received baseband digital signal to acquire the synchronization and controls the reference signal phase and level which shows the high correlation, and data demodulation section 107 that performs despreading processing of the received baseband digital signal generated in AD conversion section 103 using a known spreading code and demodulates information data. This search processing section 106 controls the spreading timing of data demodulation section 107 and data demodulation section 107 uses one or more reference signal phases with the high correlation detected by search processing section 106 as the timing of the reference signal.

The conventional mobile radio terminal apparatuse using a CDMA system configured as shown above identifies a channel using a code and share a frequency and a time, and thus it can monitor a reference signal of other base station apparatuse. The mobile radio terminal apparatuse must always search a reference signal transmitted from a base station apparatuse other than the base station apparatus with which they are currently communicating to control them so as to communicate with a base station apparatus under the better reception condition. When the reference signal of another base station apparatus exceeds the level of the base station apparatus which is actually connected, this is notified to the base station apparatus.

However, when it is not moving at all or moving at a low speed, a conventional mobile radio terminal apparatus is constantly trying to search reference signals of other base station apparatuses even if the levels of reference signals of other base station apparatuses almost do not change and there is no need to search the other base station apparatuses, originating the problem of increasing the consumed current.

### SUMMARY OF THE INVENTION

The present invention is intended to solve the conventional problem as described above and it is an objective of the present invention to provide a base station terminal apparatus that will allow the consumed current to be reduced.

The present invention uses a configuration in which the frequency of searching processing to search a reference signal transmitted from a base station apparatus corresponding to the moving speed information.

This configuration allows waste -free search processing corresponding to the moving speed of mobile radio terminal apparatuses, preventing an increase of the consumed current in the search processing, which will lead to achieve a long-time communication.

### BRIEF DESCRIPTION OF THE DRAWINGS

FIG.1 illustrates a section diagram of a conventional mobile radio terminal apparatus;
FIG.2 illustrates a section diagram of a mobile radio terminal apparatus according to Embodiment 1 of the present invention; and

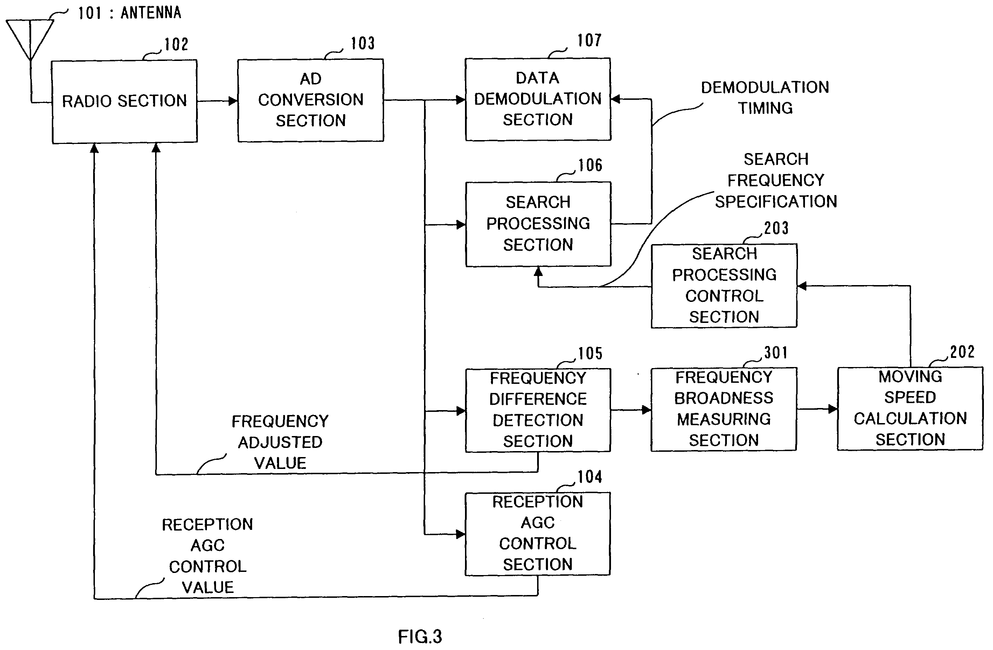

FIG.3 illustrates a section diagram of a mobile radio terminal apparatus according to Embodiment 2 of the present invention.

### DETAILED DESCRIPTION OF THE PREFERRED EMBODIMENTS

With reference now to the attached drawings, the embodiments of the present invention are explained below. The explanations of the same component parts as those in the conventional mobile radio terminal apparatus described above are omitted to avoid redundancies.

### (Embodiment 1)

A mobile radio terminal apparatus according to Embodiment 1 of the present invention is configured to reduce the consumed current by calculating the number of times of the received signal crossing the average received power and dynamically controlling the frequency of search processing.

FIG .2 illustrates a section diagram showing the configuration of a mobile radio terminal apparatus according to Embodiment 1 of the present invention. The mobile radio terminal apparatus according to Embodiment 1 of the present invention comprises, in addition to the conventional mobile radio terminal apparatus in FIG. 1, level crossing number counter section 201 that counts the number of times of the level of a short-time averaged received signal crossing the level of a long-time averaged received signal upwardly for a certain period time, moving speed calculation section 202 that calculates the moving speed, and search processing control section 203 that controls the frequency of search processing based on this moving speed information.

The operation of the mobile radio terminal apparatus according to Embodiment 1 of the present invention configured as shown above is explained below.

A radio frequency band signal received by antenna 101 is converted to a baseband signal by radio section 102, which is further converted from analog to digital by AD conversion section 103.

Then, reception AGC control section 104 calculates the time average of the received baseband digital signal to obtain the level of the received signal, and generates a reception AGC control value to adjust the reception gain so that the level of the received signal of radio section 102 should be kept constant, while it outputs the time-averaged level of the received signal to level crossing number counter section 201.

Level crossing number counter section 201 further calculates the long-time average of the level of the received signal input from reception AGC control section 104 and counts the number of times the average level of a short-time received signal crosses the average level of a long-time received signal upwardly for a certain period time. Here, "crossing upwardly" means that the average level of a short-time received signal moves from a lower level to higher level with respect to the average level of a long-time received signal. This count value is virtually equal to the Doppler frequency and is output to moving speed calculation section 202. This Doppler frequency refers to the frequency of a signal received from a base station apparatus shifted by the frequency calculated from the moving speed/signal wavelength with respect to the transmitted signal when the mobile radio terminal apparatus is moving. Therefore, it possible to calculate the moving speed by detecting the Doppler frequency.

Moving speed calculation section 202 calculates the moving speed of a mobile radio terminal apparatus using (speed of light × Doppler frequency / carrier frequency) and outputs this result to search processing control section 203. Search processing control section 203 changes the frequency of search processing based on the moving speed information and notifies it to search processing section 106. For example, search processing control section 203 divides the moving speed into two stages and controls search processing section 106 so that the frequency of search processing may be increased for high-speed moving and decreased for low-speed moving. According to this control, search processing section 106 increases or decreases the frequency of search processing.

Furthermore, search processing section 106 detects the correlation between a reference signal and received baseband digital signal to acquire the synchronization and controls the phase and level of the reference signal with the high correlation. Data demodulation section 107 carries out the despreading processing of the received baseband digital signal generated by AD conversion section 103 using a known spreading code to demodulate the information data. This search processing section 106 controls the spreading timing of data demodulation section 107 and data demodulation section 107 uses one or more reference signal phases with the high correlation detected by search processing section 106 as the timing of the reference signal.

On the other hand, frequency difference detection section 105 calculates the carrier frequency difference between the base station apparatus and mobile radio terminal apparatus from the received baseband digital signal and generates a frequency control value to directly or indirectly adjust the carrier frequency of radio section 102.

When a conventional mobile radio terminal apparatus does not move or moves at a low speed, it would constantly search reference signals of other base station apparatuses, increasing the consumed current even if the level of the reference signals of the other base station apparatuses almost does not change. However, the mobile radio terminal apparatus according to Embodiment 1 of the present invention allows search processing to be stopped temporarily when the mobile radio terminal apparatus does not move or moves at a low speed, preventing an increase of the consumed current.

### (Embodiment 2)

Then, a mobile radio terminal apparatus according to Embodiment 2 of the present invention is explained below.

The mobile radio terminal apparatus according to Embodiment 2 of the present invention is configured to reduce the consumed current by measuring the frequency broadness caused by the fading and dynamically controlling the frequency of search processing.

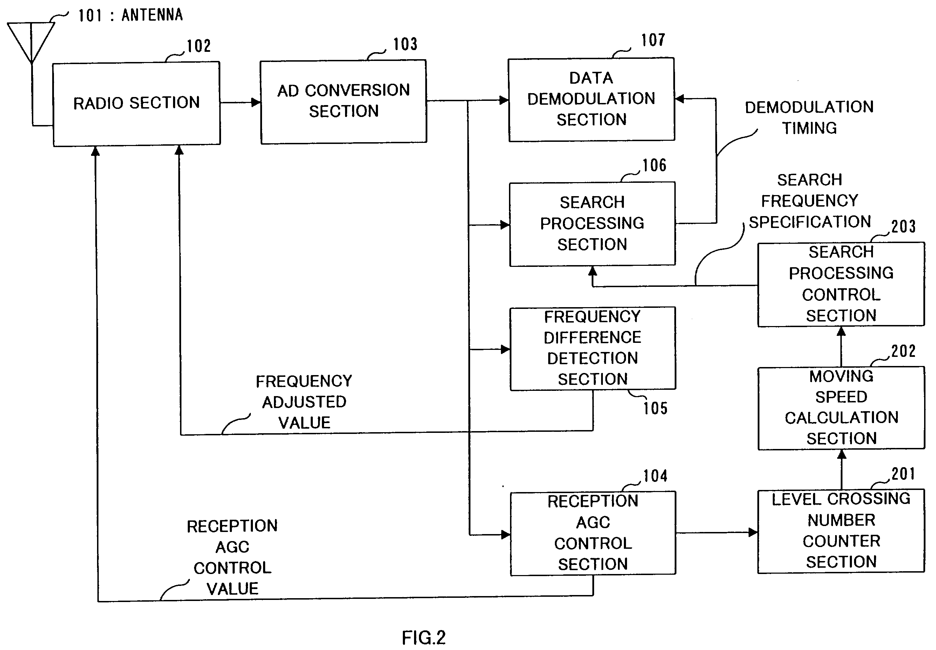

FIG.2 illustrates a section diagram of the configuration of the mobile radio terminal apparatus according to Embodiment 2 of the present invention. Instead of level crossing number counter section 201 in Embodiment 1 above, the mobile radio terminal apparatus according to Embodiment 2 of the present invention is provided with frequency broadness measuring section 301 that measures the width of frequency broadness caused by the fading and calculates the Doppler frequency.

The operation of the mobile radio terminal apparatus according to Embodiment 2 of the present invention configured as shown above is explained below.

A radio band signal received by antenna 101 is converted to a baseband signal in radio section 102, which is further converted from analog to digital in AD conversion section 103.

Then, frequency difference detection section 105 detects the carrier frequency difference between the base station apparatus and mobile radio terminal apparatus from the received baseband digital signal and outputs this carrier frequency difference to frequency broadness measuring section 301. While the mobile radio terminal apparatus is stopped, this carrier frequency difference is the carrier frequency difference between the base station apparatus and mobile radio terminal apparatus, but when the mobile radio terminal apparatus is moving, the carrier frequency is distributed with a width corresponding to the Doppler frequency caused by the fading.

Frequency broadness measuring section 301 measures the absolute value of the carrier frequency difference input by dividing it into several stages to detect the frequency broadness . The absolute value of the detected frequency broadness is output to moving speed calculation section 202 as the Doppler frequency.

Moving speed calculation section 202 measures the moving speed of the mobile radio terminal apparatus from the Doppler frequency and carrier frequency as in the case of Embodiment 1 above and outputs this moving speed information to search processing control section 203. Search processing control section 203 changes the frequency with which search processing should be carried out based on the moving speed information and notifies this to search processing section 106. Based on this information, search processing section 106 increases or decreases the frequency of search processing.

Furthermore, search processing section 106 detects correlation between a reference signal and received baseband digital signal to acquire the synchronization and controls the phase and level of the reference signal with the high correlation. Data demodulation section 107 carries out the despreading processing of the received baseband digital signal generated by AD conversion section 103 using a known spreading code to demodulate the information data. This search processing section 106 controls the spreading timing of data demodulation section 107 and data demodulation section 107 uses one or more reference signal phases with the high correlation detected by search processing section 106 as the timing of the reference signal.

As shown above, the mobile radio terminal apparatus according to Embodiment 2 of the present invention can stop the search processing temporarily when the mobile radio terminal apparatus does not move or moves at a low speed, thus preventing an increase of the consumed current.

### [FIG. 1]

101 ANTENNA
102 RADIO SECTION
103 AD CONVERSION SECTION
107 DATA DEMODULATION SECTION
106 SEARCH PROCESSING SECTION
   DEMODULATION TIMING
   FREQUENCY ADJUSTED VALUE
105 FREQUENCY DIFFERENCE DETECTION SECTION
   RECEPTION AGC CONTROL VALUE
104 RECEPTION AGC CONTROL SECTION

### [FIG.2]

101 ANTENNA
102 RADIO SECTION
103 AD CONVERSION SECTION
107 DATA DEMODULATION SECTION
106 SEARCH PROCESSING SECTION
   DEMODULATION TIMING
   SEARCH FREQUENCY SPECIFICATION
203 SEARCH PROCESSING CONTROL SECTION
   FREQUENCY ADJUSTED VALUE
105 FREQUENCY DIFFERENCE DETECTION SECTION
202 MOVING SPEED CALCULATION SECTION
   RECEPTION AG CONTROL VALUE
104 RECEPTION AGC CONTROL SECTION
201 LEVEL CROSSING NUMBER COUNTER SECTION

### [FIG.3]

101 ANTENNA
102 RADIO SECTION
103 AD CONVERSION SECTION
107 DATA DEMODULATION SECTION
106 SEARCH PROCESSING SECTION
   DEMODULATION TIMING
   SEARCH FREQUENCY SPECIFICATION
203 SEARCH PROCESSING CONTROL SECTION
   FREQUENCY ADJUSTED VALUE
105 FREQUENCY DIFFERENCE DETECTION SECTION
301 FREQUENCY BROADNESS MEASURING SECTION
202 MOVING SPEED CALCULATION SECTION
   RECEPTION AG CONTROL VALUE
104 RECEPTION AGC CONTROL SECTION

## Claims

1. A base station searching device comprising:
moving speed detection means for detecting a moving speed of a mobile station apparatus;
search processing means for searching a reference signal transmitted from a peripheral base station apparatus; and
search processing control means for controlling the number of search times to be performed in said search processing means using said moving speed.

2. The base station searching device according to claim 1, wherein said moving speed detection means comprising
Doppler frequency calculation means for calculating a Doppler frequency caused by fading, and
means for detecting the moving speed using the Doppler frequency and a carrier frequency.

3. The base station searching device according to claim 2, wherein said Doppler frequency calculation means calculates the Doppler frequency caused by fading using the number of times of the signal value of a received signal crossing the average received level.

4. The base station searching device according to claim 1, wherein said moving speed detection means comprising:
frequency broadness calculation means for calculating the frequency broadness using a difference between a carrier frequency used by the base station apparatus and a carrier frequency of the mobile station apparatus obtained from the received signal; and
moving speed detection means for detecting the moving speed using this frequency broadness and the carrier frequency.

5. The base station searching device according to claim 1, wherein said search processing control means decreases the number of search times when the moving speed is lower than a predetermined value.

6. In a mobile station apparatus for radio communicating a signal spectrum spread by a spreading code with a base station apparatus, said mobile station comprising the base station searching device according to claim 1 for controlling the number of times of searching a reference signal transmitted from a peripheral base station apparatus corresponding to moving speed information.

7. In an information mode terminal apparatus for communicating a signal spectrum-spread by a spreading code with a base station apparatus by radio, said apparatus comprising the base station searching device according to claim 1 for controlling the number of times of searching a reference signal transmitted from a peripheral base station apparatus corresponding to moving speed information.

8. A moving speed measuring method in which a Doppler frequency caused by fading using the number of times of a received signal crossing a level of an average received signal is calculated, and a moving speed of a mobile station apparatus is measured using the Doppler frequency and a carrier frequency.

9. A moving speed measuring method in which a frequency broadness is calculated using a difference between a carrier frequency used by a base station apparatus and a carrier frequency of a mobile station apparatus obtained from a receive signal, and a moving speed of the mobile station apparatus is measured using the frequency broadness and the carrier frequency.

10. A handover method in which a traveling speed is detected based on the moving speed measuring method according to claim 8, and the number of times of searching a reference signal transmitted from a peripheral base station apparatus is controlled based on the detected moving speed.

11. A handover method in which a traveling speed is detected based on the moving speed measuring method according to claim 9, and the number of times of searching a reference signal transmitted from a peripheral base station apparatus is controlled based on the detected moving speed.
